# NEUE EUROPÄISCHE PATENTSCHRIFT

(11) **EP 0 133 224 B2**
(45) Veröffentlichungstag und Bekanntmachung des Hinweises auf die Entscheidung über den Einspruch: **05.01.1994**
(45) Hinweis auf die Patenterteilung: 25.04.1990
(21) Anmeldenummer: 84108018.7
(22) Anmeldetag: 09.07.1984
(51) Int. Cl.: G02B 6/24, G02B 6/42

(54) **Kupplung für eine Lichtleitfaser**
Coupler for an optical fibre
Coupleur pour une fibre optique

(30) Priorität: 21.07.1983 CH 3993/83
(43) Veröffentlichungstag der Anmeldung: 20.02.1985
(73) Patentinhaber: ABB Management AG, 5401 Baden (CH)
(72) Erfinder: Dobler, Thomas, CH-5200 Windisch (CH)

(56) Entgegenhaltungen:
- GB-A- 2 017 963
- US-A- 4 192 574
- US-A- 4 281 891
- US-A- 4 307 934
- PATENT ABSTRACTS OF JAPAN, Band 6, Nr. 116 (E-130)[1054], 10. September 1982 & JP-A-57-93590
- 25th ELECTRONIC COMPONENTS CONFERENCE, Mai 1975, Seiten 240-247, Washington D.C., US; E. SCHIEL et al.: "Light emitting diodes and injection lasers for fiber optic communication systems"

## Beschreibung

Die Erfindung betrifft eine Kupplung für eine Lichtleitfaser gemäss dem Oberbegriff des Anspruchs 1.

Kupplungen dieser Art sind seit längerem aus der Technik der optischen Datenübertragung bekannt. Das verwendete optoelektronische Sendeelement besitzt eine optische Achse, in deren Richtung die Lichtsignale bevorzugt ausgesendet werden. Die Lichtleitfaser, in deren Endfläche die optischen Signale eingekoppelt werden sollen, weist ebenfalls eine eigene optische Achse auf, die durch eine Vorrichtung in der Kupplung fixiert ist. Das optoelektronische Sendeelement ist zum Schutz des aktiven Teils in ein geschlossenes Gehäuse eingebaut, in das, meistens an der Stirnseite, eine Austrittsöffnung für die Lichtsignale eingelassen ist.

Aus der US-A 4,281,891 ist eine Kupplung zwischen einer Laserdiode und einer Lichtleitfaser bekannt, bei der die Diode mit ihrem Gehäuse in ein mit einer Linse versehenes metallisches Zwischenstück eingepasst und dass Zwischenstück seinerseits in ein in der Faserhalterung vorgesehenes Sackloch eingeschoben oder -gedreht wird. Bei der bekannten Anwendung ist eine Justierung der Position des Zwischenstücks relativ zur Faserhalterung mit dem Ziel vorgasehen, das Licht der Diode auf die Endfläche der in der Faserhalterung fixierten Lichtleitfaser zu fokussieren. Ueber etwaige Wärmewiderstände oder Probleme der Wärmeableitung wird keine Aussage getroffen.

Aufgrund der Fertigungsbedingungen treten bei den optoelektronischen Sendeelementen im Gehäuse üblicherweise Verschiebungen zwischen der optischen und der Gehäuseachse von bis zu 0,5 mm auf, die beim Einbau des fertigen Elements in eine Kupplung berücksichtigt werden müssen. Um eine optimale Lichteinkopplung in die Lichtleitfaser zu erreichen, ist es daher unerlässlich, das Sendeelement in der Kupplung im Bezug auf die optische Achse der Lichtleitfaser zu justieren und daran anschliessend in der justierten position zu fixieren.

Dies geschieht üblicherweise dadurch, dass das Sendeelement mit seinem Gehäuse in der Aufnahmevorrichtung der Kupplung, die sowohl in axialer als auch in radialer Richtung genügend Spielraum aufweist, im Hinblick auf eine optimale Einkopplung zentriert und dann mit einem Klebstoff vergossen wird.

In einer derart hergestellten Kupplung ist das Gehäuse des Sendeelements nur über den Klebstoff, allenfalls noch über gasgefüllte, beim Vergiessen entstandene Hohlräume, mit dem Kupplungskörper verbunden. Zu der meist erwünschten elektrischen Isolation des Sendeelements gegenüber dem Kupplungskörper tritt dadurch eine thermische Isolation, die eine Abfuhr der im Sendeelement entstehenden Wärme an den metallischen Kupplungskörper behindert und, insbesondere unter extremen Umweltbedingungen, zu einer thermischen Ueberbelastung des Sendeelements führen kann. Da eine thermische Ueberbelastung jedoch die Lebensdauer des Sendeelements erheblich reduziert und damit Ausfälle in der Funktion ganzer Uebertragungsstrekken verursacht, müssen Wege gesucht werden, diesen Risikofaktor in der optischen Datenübertragung zu verringern. Da die Kupplungen in einem Uebertragungsnetz in grösseren Stückzahlen verwendet werden, dürfen zudem die erforderlichen Verbesserungen die Herstellungskosten nicht wesentlich beeinflussen.

Es ist daher Aufgabe der vorliegenden Erfindung, eine Kupplung für eine Lichtleitfaser zu schaffen, die eine verbesserte Wärmeabfuhr aus dem optoelektronischen Sendeelement in den Kupplungskörper gewährleistet und zugleich einfach und preiswert herzustellen ist.

Die Aufgabe wird bei einer Kupplung der eingangs genannten Art durch die Merkmale aus dem Kennzeichen des Anspruchs 1 gelöst.

Die zusätzliche Metallkappe, die den Wärmestrom vom Gehäuse des optoelektronischen Sendeelements aufnimmt und an den Kupplungskörper weiterleitet, hat den besonderen Vorteil, dass sie an eine Vielzahl von handelsüblichen Sendeelement-Gehäusen und Kupplungskörpern angepasst werden kann, sowohl hinsichtlich der geometrischen Abmessungen, als auch hinsichtlich der thermischen Eigenschaften des Materials, und sehr einfach und preisgünstig herzustellen ist.

Darüber hinaus kann die Metallkappe in denjenigen Fällen, in denen ein definierter Abstand zwischen der Endfläche der Lichtleitfaser und dem Sendeelement erforderlich ist, direkt zur Fixierung dieses Abstands verwendet werden.

Insbesondere ermöglicht es die Metallkappe, unabhängig von der Beschaffenheit des Sendeelement-Gehäuses, mit seiner Stirnfläche eine Wärmeübergangsfläche bereitzustellen, die hinsichtlich des Wärmeübergangs optimiert werden kann.

Die Erfindung soll nun nachfolgend anhand der Zeichnung in einem Ausführungsbeispiel näher erläutert werden.

Es zeigt:

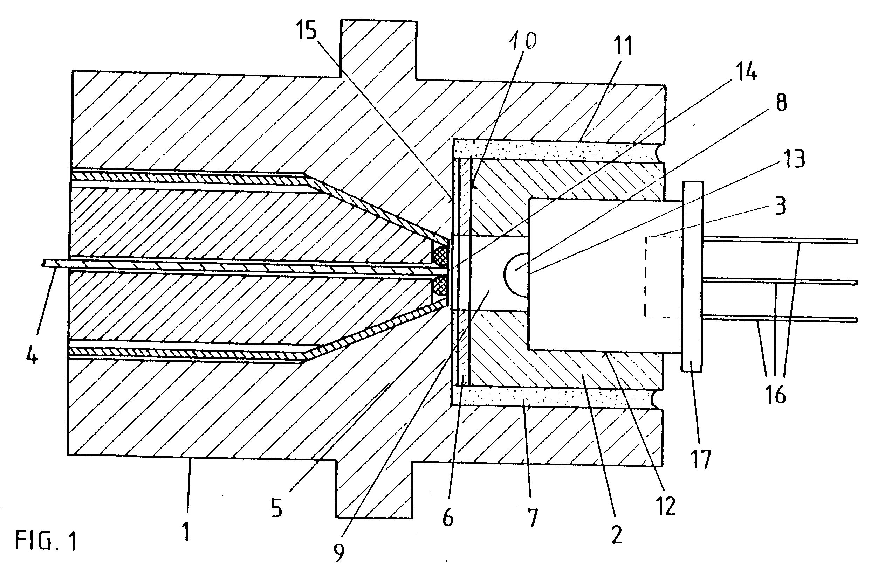

Fig. 1 ein Ausführungsbeispiel einer Kupplung nach der Erfindung.

In Fig. 1 ist ein Ausführungsbeispiel für eine Kupplung mit verbesserter Wärmeableitung dargestellt. Die Kupplung enthält als Hauptteil einen Kupplungskörper 1 aus Metall, in den eine erste Vorrichtung zur Aufnahme des Endstücks einer Lichtleitfaser 4 eingelassen ist. Diese erste Vorrichtung ist bei den verschiedenen, auf dem Markt befindlichen Kupplungen unterschiedlich ausgeführt und soll daher hier nicht näher beschrieben werden. Die in der ersten Vorrichtung fixierte Lichtleitfaser 4 endet mit einer Endfläche 14 innerhalb des Kupplungskörpers 1. Die Endfläche 14 liegt etwa auf gleicher Höhe mit dem Boden 15 eines Sacklochs 11, das von der anderen Seite in den Kupplungskörper 1 hineinreicht und durch eine Oeffnung im Boden 15 den optischen Zugang zu der Endfläche 14 ermöglicht.

Das Sackloch 11 dient zur Aufnahme eines optoelektronischen Sendeelements 3, welches zum Schutz des aktiven Teils in einem weitgehend geschlossenen Gehäuse 12 untergebracht ist. Das Gehäuse 12 besteht üblicherweise aus Metallblech mit veredelter Oberfläche, kann jedoch in Sonderfällen auch aus einem anderen Material, z.B. einem Kunstharz, gefertigt sein. An der Stirnseite des Gehäuses 12 befindet sich eine Austrittsöffnung 13 für die ausgesendeten Lichtsignale. Zur Bündelung divergierender Lichtstrahlen ist in der Austrittsöffnung 13 häufig eine Fokussierlinse 8 vorgesehen, deren Einkopplungsbrennpunkt ausserhalb des Gehäuses 12 in der Endfläche 14 liegt. Durch einen der Austrittsöffnung 13 gegenüberliegenden Gehäuseboden 17 sind Anschlussdrähte 16 für die elektrische Versorgung des optoelektronischen Sendeelements 3 nach aussen geführt.

Das optoelektronische Sendeelement 3, bevorzugt eine Sendediode, ist mit seinem Gehäuse 12 in eine Metallkappe 2 eingepasst. Diese Einpassung ist vorzugsweise als leichter Pressitz ausgeführt, um einen guten Wärmeübergang zwischen Gehäuse 12 und Metallkappe 2 zu gewährleisten. Das Gehäuse 12 wird dabei soweit als möglich in die Metallkappe eingelassen, so dass der überwiegende Teil der Gehäuseoberfläche mit der Metallkappe in Berührung steht. Günstig ist es auch, einen Teil der Gehäusestirnflächen für die Wärmeabfuhr einzusetzen.

Die Metallkappe 2 besteht aus einem Material, das einerseits eine möglichst hohe Wärmeleitfähigkeit besitzt und andrerseits hinsichtlich der Wärmeausdehnung dem Material des Gehäuses 12 angepasst ist. Ist also beispielsweise das Gehäuse 12 aus einem Messingblech gefertigt, werden gute Ergebnisse mit einer Metallkappe 2 aus Messing oder Kupfer erzielt. Die Anpassung der Ausdehnungskoeffizienten verhindert, dass sich der Wärmeübergang zwischen Gehäuse 12 und Metallkappe 2 bei grösseren Temperaturschwankungen verschlechtert.

Zur Stirnseite hin ist die Metallkappe 2 mit einem Durchgangsloch 9 versehen, durch das die Lichtsignale von der Austrittsöffnung 13 zur Endfläche 14 der Lichtleitfaser 4 gelangen können. Die Stirnfläche 10 der Metallkappe 2 ist thermisch an den Boden 15 des Sacklochs 11 angekoppelt. Im Ausführungsbeispiel der Fig. 1 erfolgt diese Ankopplung über eine Isolierschicht 6 und eine nachfolgende Schicht 5 aus einer Wärmeleitpaste. In anderen Fällen kann jedoch auch zwischen der Isolierschicht 5 und der Stirnfläche 10 eine weitere Schicht aus Wärmeleitpaste vorgesehen werden, um Unebenheiten in den angrenzenden Oberflächen auszugleichen. In jedem Fall sollte der Wärmewiderstand zwischen dem Gehäuse 12 und dem Kupplungskörper 1 kleiner als 100 °C/W sein, um eine sichere Abfuhr der Wärme aus dem Sendeelement an die Umgebung zu gewährleisten.

Die Isolierschicht 6 besteht aus einem elektrisch isolierenden Material mit vergleichweise guter Wärmeleitfähigkeit, wie z.B. Berylliumoxid oder Glimmer. Solche Isolierschichten sind dem Fachmann aus der Leistungselektronik bekannt und dienen dort als isolierende Zwischenlage zwischen einem Leistungshalbleiter und seinem Kühlkörper. Ebenso lassen sich Kunststoff-Folien verwenden, die unter dem Namen "Mylar" im Handel sind. Mit gutem Erfolg sind insbesondere Folien eingesetzt worden, die von der Firma Thermalloy Inc. unter dem Handelsnamen "Thermafilm" vertrieben werden und der amerikanischen Militärspezifikation Mil-P 46112 genügen. In solchen Anwendungen, in denen eine Spannungsfestigkeit der Isolierung in der Grössenordnung von nur einigen Volt ausreicht, ist es besonders vorteilhaft, die Isolierschicht 6 in einer Dicke von weniger als 0,1 mm auszuführen, um den Einfluss der Schicht auf den Wärmeübergang möglichst klein zu halten.

Die Schicht 5 aus Wärmeleitpaste sollte aus den gleichen Gründen ebenfalls so dünn wie möglich sein und in ihrer Dicke so gewählt werden, dass die Oberflächenrauhigkeiten und -unebenheiten der angrenzenden Wärmeübergangsflächen sicher ausgeglichen werden und eine gute Anpassung über die gesamte zur Verfügung stehende Fläche erreicht wird. Diese Anforderungen sind dann erfüllt, wenn vor dem Zusammenbau der Kupplung die der Lichtleitfaser 4 zugewandte Seite der Isoliersohicht 6 dünn und gleichmässig mit der Wärmeleitpaste bestrichen wird, und nach dem Einsetzen der Metallkappe 2 in das Sackloch 11 die Metallkappe mit den dazwischenliegenden Schichten 5 und 6 mit leichtem Druck in Richtung der optischen Achse gegen den Kupplungskörper 1 gepresst und unter Druck mit einem Klebstoff fixiert wird.

Als Wärmeleitpaste kommt wiederum eine derjenigen Pasten in Frage, die dem Fachmann aus der Leistungselektronik bekannt sind. Besonders vorteilhaft wegen ihrer thermischen und chemischen Eigenschaften sind die Wärmeleitpasten auf Silikonbasis. Auch ist es möglich, statt einer Paste ein dickflüssiges Wärmeleitöl zu verwenden.

Die Fixierung des optoelektronischen Sendeelements 3 mit der umschliessenden Metallkappe 2 in dem Sackloch 11 des Kupplungskörpers 1 erfolgt durch eine Klebstoffüllung 7 in den nach der Justierung freibleibenden Räumen zwischen Metallkappe und Kupplungskörper. Die Wahl des Klebstoffs in Hinsicht auf die Wärmebeständigkeit, das thermische Verhalten und den erforderlichen Aushärtungsprozess, kann von dem Fachmann nach den Erfordernissen vorgenommen werden, die sich aus dem späteren Einsatz der Kupplung ergeben und durch die Grenzdaten des verwendeten optoelektronischen Sendeelements beeinflusst werden. So besteht z.B. die Möglichkeit, ein metallgefülltes Epoxydharz einzusetzen, um den seitlichen Wärmeübergang zum Kupplungskörper zusätzlich zu verbessern.

Bei dem in Fig. 1 dargestellten Ausführungsbeispiel, bei dem in der Austrittsöffnung 13 eine Fokussierlinse 8 eingesetzt ist, wird eine optimale Lichteinkopplung in die Endfläche 14 nur dann erreicht, wenn zwischen der Endfläche und Linsenebene ein definierter Abstand eingestellt ist. Während bei den bisher bekannten Kupplungen dieser Abstand bei der Justierung erst eingestellt und dann durch den Klebstoff fixiert wurde, ist die Einstellung hier vorteilhafterweise bereits durch die speziell gewählten Abmessungen der Metallkappe 2 unter Berücksichtigung der Dicke etwaiger Isolierschichten 6 bereits vorgegeben und auch fixiert. Dadurch wird der Prozess der Justierung auf die Achsen senkrecht zur optischen Achse beschränkt und wesentlich erleichtert.

Insgesamt hat es sich als günstig erwiesen, den Wärmewiderstand zwischen dem Gehäuse 12 und dem Kupplungskörper 1, der durch die Art der Wärmeübergangsflächen und der Metallkappe 2 bestimmt wird, kleiner oder ungefähr gleich dem Wärmewiderstand zwischen dem optoelektronischen Sendeelement 3 und seinem Gehäuse 12 zu wählen. Dann wird die gesamte Wärmeleitung von dem Sendeelement zur Umgebung im wesentlichen nur noch von dem vorgegebenen, internen Aufbau des Sendeelements in seinem Gehäuse bestimmt und kann durch äussere Massnahmen nicht mehr entscheidend verbessert werden.

Das Ausführungsbeispiel aus Fig. 1 zeigt den speziellen Fall einer Kupplung mit Potentialtrennung zwischen dem Gehäuse 12 des optoelektronischen Sendeelements 3 und dem Kupplungskörper 1. Ist eine solche Potentialtrennung dagegen nicht notwendig, kann die Isolierschicht 6 weggelassen werden und die Metallkappe 2 nur über die Schicht 5 an den Kupplungskörper angekoppelt sein. Ebenso sind in Abwandlung der Form aus Fig. 1 andere Formen für die Metallkappe 2 vorteilhaft, wenn der Kupplungskörper 1 und das Gehäuse 12 in anderer Weise ausgeführt sind. Diese Abwandlung kann von dem Fachmann im Sinne der vorliegenden Erfindung ohne Schwierigkeiten vorgenommen werden.

### Beispiel:

Es wurden mit Infrarot-Sendedioden vom Typ la 124 und 1A 137 der Firma ASEA, die Licht bei 860 bzw. 900 nm emittieren, Versuche durchgeführt, bei denen die Dioden einerseits in bekannter Weise in den Kupplungskörper eingegossen waren und andererseits über eine Metallkappe, eine 0,06 mm dicke "Thermafilm"-Folie und eine Zwischenschicht aus Wärmeleitpaste an den Kupplungskörper thermisch angekoppelt waren. Die Dioden wurden in allen Fällen mit einem Strom von 100 mA betrieben und nahmen eine Leistung von etwa 150 mW auf.

Ohne Metallkappe und thermische Ankopplung stieg die Gehäusetemperatur, ausgehend von etwa 20°C beim Einschalten, auf über 50°C und erreichte keinen stationären Wert.

Mit der thermischen Ankopplung über die Metallkappe wurde bei den gleichen Anfangsbedingungen eine Erhöhung der Gehäusetemperatur um lediglich 3°C gemessen. Diese Erhöhung stellte sich als stationärer Wert ein.

## Patentansprüche

1. Kupplung für eine Lichtleitfaser, umfassend:
(a) einen Kupplungskörper (1) aus Metall,
(b) in dem Kupplungskörper (1) eine erste Vorrichtung zur Aufnahme des Endstücks einer Lichtleitfaser (4),
(c) ein optoelektronisches Sendeelement (3) in einem Gehäuse (12) mit einer Austrittsöffnung (13) für das ausgesendete Licht,
(d) eine zweite Vorrichtung zur Aufnahme des optoelektronischen Sendeelements (3), der Art, dass die Austrittsöffnung (13) der Endfläche (14) der Lichtleitfaser (4) gegenüberliegt, welche zweite Vorrichtung als Sackloch (11) in dem Kupplungskörper (1) ausgebildet ist, wobei
(e) das optoelektronische Sendeelement (3) in eine Metallkappe (2) eingepasst ist,
(f) die Metallkappe (2) ein Durchgangsloch (9) für die optische Verbindung zwischen Austrittsöffnung (13) und Endfläche (14) aufweist, und
(g) das optoelektronische Sendeelement (3) zur Verbesserung der Wärmeableitung über die Metallkappe (2) an den Kupplungskörper (1) thermisch angekoppelt ist, wobei
(h) die Stirnfläche (10) der Metallkappe (2) an den Boden (15) des Sacklochs (11) thermisch angekoppelt ist,
dadurch gekennzeichnet, dass
(i) die Metallkappe (2) und das Gehäuse (12) des optoelektronischen Sendeelements (3) ausserhalb der Stirnfläche (10) von dem Kupplungskörper (1) elektrisch isoliert sind,
(j) zwischen der Stirnfläche (10) und dem Boden (15) des Sacklochs (11) eine durch die Metallkappe (2) gegen den Boden (15) des Sacklochs (11) gedrückte elektrische Isolierschicht (6) aus einer Wärmeleitfolie vorgesehen ist, und
(k) der Wärmewiderstand zwischen dem Gehäuse (12) des optoelektronischen Sendeelements (3) und dem Kupplungskörper (1) kleiner als 100°C/W ist.

2. Kupplung nach Anspruch 1, dadurch gekennzeichnet, dass zwischen der Stirnfläche und dem Boden (15) eine Schicht (5) aus Wärmeleitpaste, vorzugsweise auf Silikonbasis, vorgesehen ist.

3. Kupplung nach Anspruch 1, dadurch gekennzeichnet, dass die Dicke der Isolierschicht (6) weniger als 0,1 mm beträgt.

4. Kupplung nach einem der Ansprüche 1 bis 3, dadurch gekennzeichnet, dass das optoelektronische Sendeelement (3) in die Metallkappe (2) im leichten Pressitz eingepasst ist.

5. Kupplung nach einem der Ansprüche 1 bis 4, dadurch gekennzeichnet, dass die Metallkappe (2) aus einem Metall besteht, das in seiner Wärmeausdehnung dem Material des Gehäuses (12) angepasst ist.

6. Kupplung nach einem der Ansprüche 1 bis 5, dadurch gekennzeichnet, dass der Wärmewiderstand zwischen Gehäuse (12) und Kupplungskörper (1) kleiner oder ungefähr gleich dem Wärmewiderstand zwischen dem optoelektronischen Sendeelement (3) und dem Gehäuse (12) ist.

7. Kupplung nach einem der Ansprüche 1 bis 6, dadurch gekennzeichnet, dass das optoelektronische Sendeelement (3) eine optische Sendediode ist, dass das Gehäuse (12) an der Austrittsöffnung (13) eine Fokussierlinse (8) mit einem ausserhalb des Gehäuses (12) liegenden Einkopplungsbrennpunkt auweist, und dass der Abstand zwischen der Fokussierlinse (8) und der Endfläche (14) der Lichtleitfaser (4) durch die Metallkappe (2) so festgelegt ist, dass der Einkopplungsbrennpunkt ungefähr in der Endfläche (14) liegt.

8. Kupplung nach einem der Ansprüche 1 bis 7, dadurch gekennzeichnet, dass das Sackloch (11) gegenüber der Metallkappe (2) zur Justierung der optischen Achsen mit Übermass ausgeführt ist, und dass die Metallkappe (2) in dem Sackloch (11) seitlich mittels einer Klebstofffüllung (7) fixiert ist.

## Claims

1. Coupling for a light-conducting fibre, comprising
(a) a coupling body (1) of metal,
(b) in the coupling body (1), a first device for holding the end piece of a light-conducting fibre (4),
(c) an opto-electronic transmitting element (3) in a housing (12) having an exit opening (13) for the light emitted,
(d) a second device for holding the opto-electronic transmitting element (3) of the type that the exit opening (13) is opposite to the end face (14) of the light-conducting fibre (4), which second device is formed as a blind hole (11) in the coupling body (1),
(e) the opto-electronic transmitting element (3) being fitted into a metal cap (2),
(f) the metal cap (2) having a through-hole (9) for the optical connection between exit opening (13) and end face (14),
(g) the opto-electronic transmitting element (3) being thermally coupled via the metal cap (2) to the coupling body (1) in order to improve heat dissipitation,
(h) the front face (10) of the metal cap (2) being thermally coupled to the bottom (15) of the blind hole (11),
characterized in that
(i) the metal cap (2) and the housing (12) of the opto-electronic transmitting element (3) are electrically insulated from the coupling body (1) outside the front face (10),
(j) between the front face (10) and the bottom (15) of the blind hole (11), an electric insulating layer (6) of a heat-conducting foil, pressed against the bottom (15) of the blind hole (11) by the metal cap (2) is provided, and
(k) the thermal resistance between the housing (12) of the opto-electronic transmitting element (3) and the coupling body (1) is less than 100°C/W.

2. Coupling according to Claim 1, characterized in that between the front face and the bottom (15) a layer (5) of heat-conducting paste, preferably silicone-based, is provided.

3. Coupling according to Claim 1, characterized in that the thickness of the insulating layer (6) is less than 0.1 mm.

4. Coupling according to one of Claims 1 to 3, characterized in that the opto-electronic transmitting element (3) is fitted into the metal cap (2) with a light press fit.

5. Coupling according to one of Claims 1 to 4, characterized in that the metal cap (2) consists of a metal the thermal expansion of which is matched to the material of the housing (12).

6. Coupling according to one of Claims 1 to 5, characterized in that the thermal resistance between the housing (12) and the coupling body (1) is less than or approximately equal to the thermal resistance between the opto-electronic transmitting element (3) and the housing (12).

7. Coupling according to one of Claims 1 to 6, characterized in that the opto-electronic transmitting element (3) is an optical transmitting diode, in that the housing (12) has at the exit opening (13) a focussing lens (8) the coupling focus of which is outside the housing (12) and in that the distance between the focussing lens (8) and the end face (14) of the light-conducting fibre (4) is fixed by the metal cap (2) in such a manner that the coupling focus is approximately in the end face (14).

8. A coupling according to one of Claims 1 to 7, characterized in that the blind hole (11) is constructed with excessive dimensions with respect to the metal cap (2) for the purpose of aligning the optical axes, and in that the metal cap (2) is laterally fixed in the blind hole (11) by means of an adhesive filling (7).

## Revendications

1. Coupleur pour une fibre optique, comprenant:
a) un corps de coupleur (1) en métal,
b) un premier dispositif dans le corps de coupleur (1) pour recevoir le bout d'une fibre optique (4),
c) un élément émetteur optoélectronique (3) dans un boîtier (12) présentant un orifice de sortie (13) pour la lumière émise,
d) un second dispositif pour recevoir l'élément émetteur optoélectronique (3), de telle sorte que l'orifice de sortie (13) soit opposé à la face d'extrémité (14) de la fibre optique (4), ce second dispositif étant configuré en tant que logement borgne (11) dans le corps de coupleur (1), dans lequel
e) l'élément émetteur optoélectronique (3) est ajusté dans une virole métallique (2),
f) la virole métallique (2) présente un trou de passage (9) pour la liaison optique entre l'orifice de sortie (13) et la face d'extrémité (14), et
g) l'élément émetteur optoélectronique (3) est couplé thermiquement au corps de coupleur (1) par l'intermédiaire de la virole métallique (2) pour améliorer la dissipation thermique, dans lequel
h) la face d'about (10) de la virole métallique (2) est couplée thermiquement au fond (15) du logement borgne (11),
caractérisé en ce que
i) la virole métallique (2) et le boîtier (12) de l'élément émetteur optoélectronique (3) sont isolés électriquement du corps de coupleur (1) en dehors de la face d'about (10),
j) entre la face d'about (10) et le fond (15) du logement borgne (11) est prévue une couche isolante (6) électrique pressée par la virole métallique (2) contre le fond (15) du logement borgne (11), en une pellicule conductrice de la chaleur, et
k) la résistance thermique entre le boîtier (12) de l'élément émetteur optoélectronique (3) et le corps de coupleur (1) est inférieure à 100°C/W.

2. Coupleur suivant la revendication 1, caractérisé en ce qu'entre la face d'about et le fond (15) est prévue une couche (5) d'une pâte conductrice de chaleur, de préférence à base de silicone.

3. Coupleur suivant la revendication 1, caractérisé en ce que l'épaisseur de la couche isolante (6) est inférieure à 0,1 mm.

4. Coupleur suivant l'une quelconque des revendications 1 à 3, caractérisé en ce que l'élément émetteur optoélectronique (3) est ajusté dans la virole métallique (2) d'une manière légèrement serrée.

5. Coupleur suivant l'une quelconque des revendications 1 à 4, caractérisé en ce que la virole métallique (2) est faite d'un métal qui est adapté, quant à sa dilatation thermique, à la matière du boîtier (12).

6. Coupleur suivant l'une quelconque des revendications 1 à 5, caractérisé en ce que la résistance thermique entre le boîtier (12) et le corps de coupleur (1) est inférieure ou à peu près égale à la résistance thermique entre l'élément émetteur optoélectronique (3) et le boîtier (12).

7. Coupleur suivant l'une quelconque des revendications 1 à 6, caractérisé en ce que l'élément émetteur optoélectronique (3) est une diode émettrice optique, le boîtier (12) présente dans son orifice de sortie (13) une lentille de focalisation (8) dont le foyer d'injection est situé en dehors du boîtier (12), et la distance entre la lentille de focalisation (8) et la face d'extrémité (14) de la fibre optique (4) est fixée par la virole métallique (2) d'une manière telle que le foyer d'injection soit situé à peu près sur la face d'extrémité (14).

8. Coupleur suivant l'une quelconque des revendications 1 à 7, caractérisé en ce que le logement borgne (11) est surdimensionné par rapport à la virole métallique (2) en vue de l'ajustement des axes optiques, et la virole métallique (2) est fixée dans le logement borgne (11) latéralement par un scellement (7) à l'adhésif.
